# EUROPEAN PATENT APPLICATION

(11) **EP 4 659 982 A1**
(43) Date of publication of application: **10.12.2025**
(21) Application number: 24179473.4
(22) Date of filing: 03.06.2024
(51) Int. Cl.: B60K 35/22

(54) **METHOD TO OPERATE USER EQUIPMENT, APPARATUS AND COMPUTER PROGRAM**

(71) Applicant: Bayerische Motoren Werke Aktiengesellschaft, 80809 München (DE)
(72) Inventor: Droste, Matthias, 85748 Garching (DE); Zaki, Tarek, 80805 München (DE)

(57) **Abstract**

A method (100) to operate a user equipment comprises receiving information about a position of a user or of the user equipment (110), the position being relative to a vehicle and adjusting a functionality of a software executed by the user equipment (120) based on the information about the position.

## Description

The present disclosure relates to methods to operate a user equipment to control functions of a vehicle.

A user equipment, e.g. a smartphone, can be used to control functionalities of a vehicle. This enables a user of the user equipment to control the vehicle remotely, which may improve a user experience. Modem vehicles have multiple functionalities that can be controlled. For example, the functionalities can be user specific in-car settings, such as the position of the seats, the position of the steering wheel, the orientation of the mirrors, climate control, playback control of the multimedia system, and driving modes. Also, the functionalities can be for controlling the vehicle from the outside such as remote-controlled parking, opening/closing doors and windows, flashing the lights, and blowing the horn. Displaying control options for multiple features may lead to erroneous input, which may not only result in wrong settings but eventually also cause trouble for a user. For example, if a user unintentionally activates the remote parking control of the vehicle while still sitting inside of the vehicle, the user may risk damaging the vehicle because he does not have the precise overview over the environment he would have while standing next to the vehicle. Thus, there may be a need for an improvement in adaptation of functionalities executed by the user equipment to control a vehicle.

Examples provide a method to operate a user equipment. The method comprises receiving information about a position of a user or of the user equipment. The position is relative to a vehicle. Further, the method comprises adjusting a functionality of a software executed by the user equipment based on the information about the position. In this way, the functionality of the software is adjusted based on the position of a user or of the user equipment without a manual user input. Using the adjusted functionality of the software may facilitate an automated change of functionalities provided by the software running on the user equipment.

In an example, the information about the position may indicate whether the user or the user equipment is within or outside the vehicle. In this way, the method may provide a way to determine the position of the user or of the user equipment within proximity of the vehicle.

In an example, adjusting the functionality may comprises changing control features of the vehicle displayed on a graphical user interface of the software. In this way, the method may provide a way to control a vehicle accordingly based on the information about the position.

Examples relate to a method a method to determine a position of a user or of a user equipment. The method comprises using a first sensor and a second sensor. The first sensor and the second sensor are configured to determine the position of the user or of the user equipment relative to a vehicle. Further, the method comprises combining data provided by the first sensor and the second sensor to determine the position of the user. In this way, the method may provide a way to determine the position of the user or the user equipment more accurately using the two sensors than using a single sensor. Combining data provided by the first and the second sensors may improve reliability and accuracy of position detection of the user or of the user equipment relative to the vehicle.

In an example, the method may further comprise determining the position comprises determining whether the user or the user equipment is within the vehicle or outside of the vehicle.

In this way, the method may provide a way to determine the position of the user or of the user equipment within proximity of the vehicle.

In an example, at least one sensor of a group of the first sensor and the second sensor is an ultrawide band sensor. In this way, the method may provide an improved spatial resolution to determine the position of the user or of the user equipment. Using the ultrawide band sensor, the method may provide an accurate position information of the user or of the user equipment.

In an example, the first sensor or the second sensor is a sensor of a group of an interior camera, an exterior camera, a seat-occupancy sensor, a seat belt lock sensor, and a sensor to evaluate proximity of a key to the vehicle.

In an example, at least one sensor of a group of the first and the second sensors is coupled to the vehicle to transmit a signal for the position determination.

In an example, the method may further comprise transmitting information about the position of the user or the user equipment to a user equipment. In this way, the user equipment may utilize the information about the position in its operation.

Examples relate to a user equipment. The user equipment comprises a communication circuitry configured to receive information about a position of a user or of the user equipment. The position is relative to a vehicle. Further, the user equipment comprises a processing circuitry configured to adjust a functionality of the user equipment based on the information about the position. In this way, the user equipment may provide a way to utilize the interactively adapted functionality based on the information about the position.

In an example, the adjustment of the functionality of the user equipment may comprise changing features of the vehicle controllable using the user equipment. In this way, the user equipment may provide a way to control a vehicle remotely without a manual user input depending on the position of the user or of the user equipment.

In an example, the features of the vehicle controllable may comprise at least one feature of the group of a remote service, a status of the vehicle, a digital key, a smart home, driving information, maintenance, a service alert, a location service, a climate control, a light control, a seat control, and parking.

Examples relate to a vehicle. The vehicle comprises a first sensor and a second sensor. The first sensor and the second sensor are configured to determine a position of the user or of a user equipment relative to the vehicle. Further, the vehicle comprises a processing circuitry configured to combine data provided by the first sensor and the second sensor to determine the position of the user. The vehicle comprises a communication circuitry configured to transmit the information about the position of the user to a user equipment. In this way, the vehicle may provide a way to transmit the accurate information about the position of the user or the user equipment to the user equipment using the first and the second sensors.

In an example, the first sensor or the second sensor may be a sensor of the group of an interior camera, an exterior camera, a seat-occupancy sensor, a seat belt lock sensor, a sensor to evaluate proximity of a key to the vehicle, and an ultrawide band sensor.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 illustrate a flowchart of a method to operate a user equipment;
Fig. 2 illustrate a flowchart of a method to determine a position of a user or of a user equipment;
Fig. 3 illustrate an example of a user equipment; and
Fig. 4 illustrate an example of a vehicle.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

A method 100 relates to operating a user equipment, which comprises receiving information about a position of a user or of the user equipment. In some embodiments, the position may be determined by an embodiment of a method 200 determining a position of a user or of user equipment. The methods 100 and 200 are described jointly in the following paragraphs.

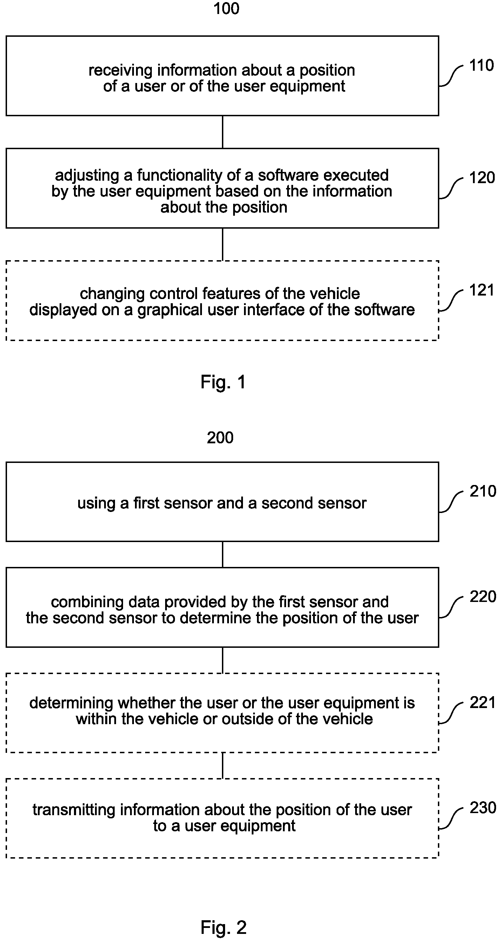

**Fig. 1** shows a flowchart of the method 100 to operate a user equipment. The method 100 comprises receiving information about a position of a user or of the user equipment 110, wherein the position of the user or of the user equipment is relative to a vehicle. The method 100 comprises adjusting a functionality of a software executed by the user equipment 120 based on the information about the position.

An application or software running on a user equipment, for example a smartphone, is widely used to assist a user to control a vehicle remotely. However, it typically provides various functionalities, which is not optimized for a position of a user or an intention of a user. Therefore, the user may need to select a desirable functionality by him/herself. The method 100 may provide an improved way to operate the user equipment by adjusting the functionality of the software executed by the user equipment 120 based on the information about the position without a manual user input. For example, the functionality may be a control for media, navigation, communication function, vehicle setting, or information in a dashboard of the vehicle. The functionality may be, for example, parking or digital key to lock/unlock the vehicle. It is worth noting that the functionality is not limited to the above-mentioned features but can be any features related to the vehicle.

Further, the information about the position may optionally indicate whether the user or the user equipment is within or outside the vehicle. Additionally, adjusting the functionality of the software executed by the user equipment 120 may optionally comprise changing control features of the vehicle 131 displayed on a graphical user interface of the software. It can further improve a user experience by directly providing controllable features of the vehicle on the graphical user interface appropriately. Instead of changing control features displayed on user equipment by the user him/herself manually, it may be convenient if the features are adjusted accordingly based on the position of the user relative to the vehicle, for example, switching from an in-car mode to a near-car mode, or vice versa. The in-car mode can be control features which the user may need if the user or the user equipment is within the vehicle, for example controlling functions in the dashboard. The near-car mode can be control features which the user may need if the user or the user equipment is outside the vehicle, for example parking or the digital key. It is worth nothing that the information about the position is not limited to determine whether the user or the user equipment is within the vehicle or not. It may optionally further be the user or the user equipment is in which position, such as different seat locations, within the vehicle and near the vehicle, for example, near a driver's door or near a trunk.

Therefore, the method 100 may provide a user an improved user experience by offering a way to operate user equipment which displays an appropriate functionality based on the position of the user or the user equipment without manual user input to control a vehicle.

The method 100 utilizes information about a position of a user or of the user equipment. Therefore, there may be a demand for precise user or user equipment localization method for the improved user experience. An exemplary method to determine a position of a user or of user equipment will be further explained in **Fig. 2**.

Fig. 2 shows a flowchart of the method 200 to determine a position of a user or of user equipment. The method 200 comprises using a first sensor and a second sensor 210, wherein the first sensor and the second sensor are configured to determine the position of the user or of the user equipment relative to a vehicle. The method 200 comprises combining data provided by the first sensor and the second sensor 220 to determine the position of the user or of the user equipment.

The combination of the data 220 using the first and the second sensors can provide more accurate and reliable assessments than those by a single sensor. Combining information of different sensors is also known as sensor fusion. By combining data from multiple sensors, the sensor fusion can enhance accuracy by mitigating an impact of any single sensor's inaccuracies. Moreover, different sensors capture varied aspects of the environment; if one fails, others can compensate, ensuring continuous operation. Therefore, the method 200 may provide the reliable and precise information about the position of the user or of the user equipment.

In an example, at least one sensor of a group of the first sensor and the second sensor may optionally be an ultrawideband (UWB) sensor. Further, the first sensor or the second sensor may optionally be a sensor of a group of an interior camera, an exterior camera, a seat-occupancy sensor, a seat belt lock sensor, and a sensor to evaluate proximity of a key to the vehicle. Additionally, determining the position of the user or of the user equipment may optionally comprise determining whether the user or the user equipment is within the vehicle or outside of the vehicle 221.

In an example, at least one sensor of a group of the first and the second sensors may optionally be coupled to the vehicle to transmit a signal for the position determination. For example, a sensor can be coupled to a vehicle, for example, the seat occupancy sensor, the UWB sensor or the in-car camera, by being integrated into a vehicle using a combination of hardware interface and communication protocol which ensure data is transmitted efficiently and securely within the vehicle's network. That can be a physical connection to the vehicle's electronic system via wiring.

A user equipment is commonly connected to or paired with an electronic control unit (ECU) of a vehicle via Bluetooth (BT), BT low energy (BLE), or Wi-Fi, which may allow a user to control the vehicle remotely using the user equipment. BLE can be understood as a wireless communication standard designed to reduce power consumption and extend battery life of devices while maintaining a communication range similar to that of BT. Also, wired connection, for example USB, can be used to control the vehicle using the user equipment. In an example, the ECU can be a headunit. The headunit can be understood as a central control system for a vehicle's multimedia and information features and vehicle setting. The user equipment can be connected or paired with any types of ECU.

Even though BT, BLE or Wi-Fi sensor is widely available, using one of the three sensors can be problematic to determine precise position of a user or a user equipment relative to a vehicle, for example, whether the user or the user equipment is inside or outside the vehicle. Since the accuracy of these sensors is typically often within a few meters, it is challenging to determine a position of a target object precisely. Moreover, wireless signals used by these sensors can suffer from interference caused by other devices emitting signals, which may lead to errors in position estimation. For example, when the user equipment is connected to the headunit of the vehicle using any one of the three sensors, it can be more challenging to determine the position of the user or the user equipment. Ongoing data transmission due to the connection may introduce additional signal interference, which can affect the strength and consistency of the signal for determining location precisely. Therefore, it may not be sufficient for determining whether the user or the user equipment is within or outside the vehicle. For close ranges of up to 10 centimeters, an NFC sensor can be used to connect and locate a position of the user or of the user equipment. However, due to its limited range, it may not be suitable for position determination if the user equipment is not within proximity for communication.

On the other hand, the UWB technique can exhibit high accuracy in position detection and tracking, which shows better precision than BT, BLE, or Wi-Fi technologies by achieving positioning accuracy to within a few centimeters. This makes UWB suitable for applications in complex environments. Also, it is robust to interference by operating a wide range of frequencies and utilizing very short pulses, making it less susceptible to interference from other signals operating in the same environment. In other words, the UWB sensor can be easily used with other wireless technologies without causing interference.

For example, the UWB sensor and the seat belt lock sensor are used together to determine the position of the user or the user equipment. When the user or the user equipment is within the vehicle, but the seat belt is not fastened, the seat belt lock sensor alone may not be used to determine the position of the user or the user equipment precisely. However, the UWB sensor can detect the position of the user or of the user equipment with accuracy to within a few centimeters. Therefore, the combined data acquired by the two sensors can determine the precise position of the user or of the user equipment within the vehicle.

Depending on situations, the user may be holding the user equipment, but the two sensors provide conflicting position information. Also, there may be situations where the position information of the user or of the user equipment relative to a vehicle, as detected by the first and the second sensors, differs.

The sensor fusion technique may be beneficial for these situations. For example, a user is seated within a vehicle while putting an arm holding the user equipment through a window of the vehicle. In such a case, if the seat belt lock sensor, the seat occupancy sensor, or a door sensor is used, any of these sensors alone may not be able to detect the position of the user correctly since those sensors indicate that the user equipment is within the vehicle.

In another situation, when both the user and the user equipment are inside the vehicle while a door of the vehicle is opened, if the door sensor is used to determine whether the user or the user equipment is inside or outside the vehicle, the information about the position of the user or the user equipment may indicate that the user or the user equipment is outside the vehicle.

In such cases, a predefined condition may be applied to determine the position of the user or of the user equipment. The predefined condition can be a different weighting factor applied to the data provided by the two sensors or setting a priority between the two sensors. For example, when the user and the user equipment are within the vehicle while the door is open, the seat belt sensor may have a higher priority than the door sensor. After the user with the user equipment exits the vehicle, both seat belt sensor and door sensor indicate that the user or the user equipment is outside the vehicle. Similarly, when the user is outside the vehicle, the user may open the door and close it again without entering the vehicle. In this case, the door sensor may indicate that the user is within the vehicle. To resolve the exemplary situation, another sensor used together with the door sensor may have a higher priority than the door sensor.

It is worth nothing that the information about the position is not limited to determine whether the user or the user equipment is within the vehicle or not. It may optionally further be the user or the user equipment is in which position, such as different seat locations, within the vehicle and near the vehicle, for example, near a driver's door or near a trunk by combining data from various combination of the two sensors to locate the user or the user equipment precisely.

Therefore, using the first sensor and the second sensor 210 can be beneficial to determine and transmit precise information about the position of the user or of the user equipment. It is worth noting that the sensor fusion is not limited to the combination of the sensors described in the exemplary situations. Any arbitrary combination of two sensors or more sensors can be used to determine the position of the user or of the user equipment precisely.

In an example, the user equipment may optionally be connected to or paired with a headunit of the vehicle. Additionally, the method 200 may optionally further comprise transmitting information about the position of the user or the user equipment to user equipment 230. As described above, using the sensor fusion, the method 200 may determine whether the user or the user equipment is within or outside the vehicle precisely. Referring to Fig. 1, the precise information about the position of the user or the user equipment may be used to change control features of the vehicle 131 displayed on the graphical user interface of the software.

For example, the UWB sensor, coupled to a door of a vehicle, can be combined with any sensors to determine the position of the user or the user information. The UWB sensor can detect the transition of the position of the user equipment from inside to outside or from outside to inside the vehicle due to its high spatial resolution with assistant of the other sensor. Based on the transmitted information about the position of the user or of the user equipment, the control features of the user equipment are changed from the in-car to the near-car functionality or vice versa.

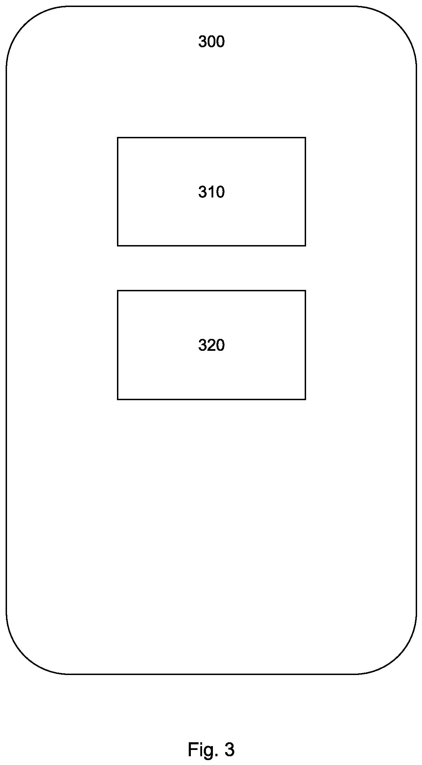

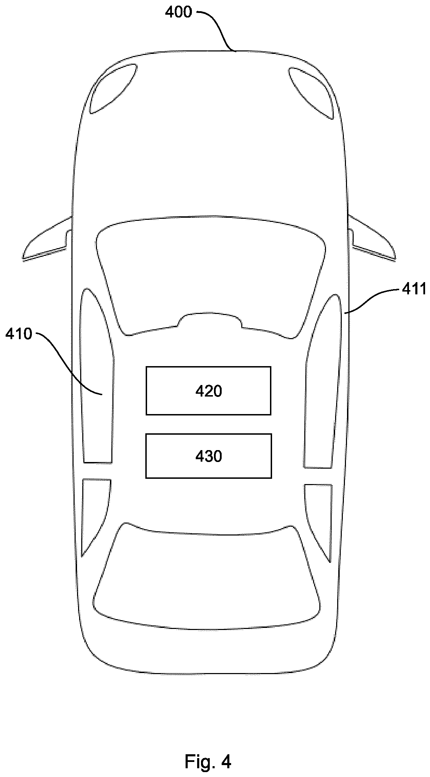

Therefore, the method 200 may provide an improved way to determine a position of a user or of user equipment and to transmit information about the position of a user or user equipment to be operated according to the method 100. This may contribute to the improved user experience. In **Figs. 3** **and** **4****,** an exemplary user equipment 300 and an exemplary vehicle 400 are described, which utilizes the methods 100 and 200.

Fig. 3 illustrates the exemplary user equipment 300. The user equipment 300 comprises a communication circuitry 310 configured to receive information about a position of a user or of the user equipment, in which the position is relative to a vehicle. The user equipment 300 comprises a processing circuitry 320 configured to adjust a functionality of the user equipment based on the information about the position.

Optionally, the adjustment of the functionality of the user equipment may comprises control features of the vehicle controllable using the user equipment.

In an example, the features of the vehicle controllable may optionally comprise at least one feature of the group of a remote service, a status of the vehicle, a digital key, a smart home, driving information, maintenance, a service alert, a location service, a climate control, a light control, a seat control, and parking.

As shown in Fig. 1, the communication circuitry 310 receives information about the position of the user or of the user equipment relative to a vehicle. Then the information is used in the processing circuitry 320 to adjust a functionality of the user equipment. Then the user equipment 300 displays control features of the vehicle accordingly, for example, an in-car or near-car functionality, which may improve the user experience by providing appropriate features without a manual user input.

Fig. 4 illustrate the exemplary vehicle 400. The vehicle 400 comprises a first sensor 410 and a second sensor 411. The first and the second sensors 410, 411 are configured to determine a position of the user or of user equipment relative to a car. The vehicle 400 comprises a processing circuitry 420, which configured to combine data provided by the first sensor 410 and the second sensor 411 to determine the position of the user. Lastly, the vehicle 400 comprises a communication circuitry 430 configured to transmit the position of the user or of the user equipment.

In an embodiment, the first sensor 410 or the second sensor 411 may optionally be a sensor of the group of an interior camera, an exterior camera, a seat-occupancy sensor, a seat belt lock sensor, a sensor to evaluate proximity of a key to the vehicle, and an UWB sensor. For illustrative purposes, the first sensor 410 is described as the UWB sensor integrated into a door of the vehicle and the second sensor 410 is illustrated as the seat-occupancy sensor within the vehicle. However, the exemplary illustration does not limit the types of sensors being used and their position.

Referring to Fig. 2, determination of the position of the user or of the user equipment is estimated using the first and the second sensors 410, 411. Then the information about the position is transmitted using the communication circuitry 430.

More details and aspects are mentioned in connection with the embodiments described. The example shown in Figs. 3 and 4 may comprise one or more optional additional features corresponding to one or more aspects mentioned in connection with the proposed concept or one or more examples described above (e.g., Figs 1 and 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

## Claims

1. A method (100) to operate a user equipment, comprising:
receiving information about a position of a user or of the user equipment (110), the position being relative to a vehicle; and
adjusting a functionality of a software executed by the user equipment (120) based on the information about the position.

2. The method (100) of claim 1, wherein the information about the position indicates whether the user or the user equipment is within or outside the vehicle.

3. The method (100) of claim 1, wherein adjusting the functionality comprises:
changing control features (121) of the vehicle displayed on a graphical user interface of the software.

4. A method (200) to determine a position of a user or of a user equipment, comprising:
using a first sensor and a second sensor (210), the first sensor and the second sensor being configured to determine the position of the user or of the user equipment relative to a vehicle; and
combining data provided by the first sensor and the second sensor (220) to determine the position of the user.

5. The method (200) of claim 4, wherein determining the position comprises:
determining whether the user or the user equipment is within the vehicle or outside of the vehicle (221).

6. The method (200) of claim 4, wherein at least one sensor of a group of the first sensor and the second sensor is an ultrawide band sensor.

7. The method (200) of claim 4, wherein the first sensor or the second sensor is a sensor of the group of an interior camera, an exterior camera, a seat-occupancy sensor, a seat belt lock sensor, and a sensor to evaluate proximity of a key to the vehicle.

8. The method (200) of any of claims 4 or 7, wherein at least one sensor of a group of the first and the second sensors is coupled to the vehicle to transmit a signal for the position determination.

9. The method (200) of claim 4, further comprising: transmitting information about the position of the user or the user equipment to a user equipment (230).

10. A user equipment (300), comprising:
a communication circuitry (310) configured to receive information about a position of a user or of the user equipment, the position being relative to a vehicle; and
processing circuitry (320) configured to adjust a functionality of the user equipment based on the information about the position.

11. The user equipment (300) of claim 10 wherein adjusting the functionality comprises:
changing features of the vehicle controllable using the user equipment.

12. The user equipment (300) of claim 11, wherein the features of the vehicle controllable comprise at least one feature of the group of a remote service, a status of the vehicle, a digital key, a smart home, driving information, maintenance, a service alert, a location service, a climate control, a light control, a seat control, and parking.

13. A vehicle (400), comprising:
a first sensor (410) and a second sensor (411), the first sensor and the second sensor being configured to determine the position of the user or of a user equipment relative to the vehicle;
processing circuitry (420) configured to combine data provided by the first sensor and the second sensor to determine the position of the user; and
communication circuitry (430) configured to transmit the position of the user to a user equipment.

14. The vehicle (400) of claim 13, wherein the first sensor or the second sensor is a sensor of the group of an interior camera, an exterior camera, a seat-occupancy sensor, a seat belt lock sensor, a sensor to evaluate proximity of a key to the vehicle, and an ultrawide band sensor.

15. A computer program having a program code for performing the method according to claims 1 - 9, when the computer program is executed on computer, a processor, or a programmable hardware component.
